(19) Europäisches Patentamt
European Patent Office
Office européen des brevets

(11) Numéro de publication : **0 038 244**
**B1**

# (12) FASCICULE DE BREVET EUROPÉEN

(45) Date de publication du fascicule du brevet : **07.08.85**

(51) Int. Cl.⁴ : **C 25 D 13/08**

(21) Numéro de dépôt : **81400522.9**

(22) Date de dépôt : **01.04.81**

## (54) Procédé de dépôt par électropolymérisation de films minces organiques sur des surfaces conductrices de l'électricité, en particulier sur des surfaces métalliques, et films minces ainsi obtenus.

(30) Priorité : **11.04.80 FR 8008177**

(43) Date de publication de la demande :
**21.10.81 Bulletin 81/42**

(45) Mention de la délivrance du brevet :
**07.08.85 Bulletin 85/32**

(84) Etats contractants désignés :
**DE GB IT NL**

(56) Documents cités :
**DE-A- 2 140 849**

(73) Titulaire : **COMMISSARIAT A L'ENERGIE ATOMIQUE**
**Etablissement de Caractère Scientifique Technique et Industriel**
**B.P. 510**
**F-75752 Paris Cedex 15 (FR)**

(72) Inventeur : **Lecayon, Gérard**
**Lotissement des Aulnettes No 20**
**F-91640 Briis Sous Forges (FR)**
Inventeur : **Le Gressus, Claude**
**4, Square Arago**
**F-78330 Fontenay Le Fleury (FR)**
Inventeur : **Le Moel, Alain**
**1, rue du Colonel Marchand**
**F-92370 Chaville (FR)**

(74) Mandataire : **Mongrédien, André et al**
**c/o BREVATOME 25, rue de Ponthieu**
**F-75008 Paris (FR)**

EP 0 038 244 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet un procédé de dépôt par électropolymérisation de films minces organiques sur des surfaces conductrices de l'électricité, en particulier sur des surfaces métalliques.

De façon plus précise, elle concerne la formation de tels films à partir d'une solution comprenant un monomère, un électrolyte-support et un solvant, par électropolymérisation à un potentiel situé dans la zone correspondant au transfert électronique direct entre la surface métallique qui joue le rôle de cathode et le monomère, et d'une valeur plus négative que celle correspondant au pic d'inhibition de la réaction cathodique du monomère.

La réalisation de surfaces métalliques revêtues de films minces organiques présente un grand intérêt dans de nombreux domaines, en particulier pour la fabrication de composants électroniques ou de dispositifs optiques intégrés, pour la protection anticorrosion, pour toutes modifications des propriétés superficielles des métaux.

Aussi, depuis quelques années, de nombreuses recherches ont été effectuées sur les possibilités d'obtenir par électropolymérisation le dépôt sur des surfaces métalliques de films minces organiques présentant des propriétés satisfaisantes, notamment en ce qui concerne leur adhérence sur ces surfaces et leur homogénéité.

Ces recherches ont été orientées en particulier sur le choix des électrolytes-supports et des solvants susceptibles d'être utilisés pour former de tels films, soit par polymérisation anionique, soit par polymérisation radicalaire. En particulier, les travaux portant sur le dépôt de films de polyacroléine ont montré que le choix du milieu réactionnel jouait un rôle très important sur l'adhérence du film obtenu. Ainsi, on a trouvé que les meilleurs résultats étaient obtenus lorsqu'on utilisait comme électrolyte-support du perchlorate de benzyltriméthylammonium avec du diméthyl formamide comme solvant.

Par ailleurs, dans le cas des dépôts de films de polyacroléine, on a trouvé que l'homogénéité du film dépendait en particulier du potentiel appliqué à la surface métallique à revêtir et que ce potentiel devait de préférence être limité à une valeur inférieure à − 2,2 volts par rapport à une électrode Hg-$Hg^{2+}$.

Cependant, malgré le choix du milieu réactionnel et d'un potentiel de dépôt approprié, cette technique n'a pas permis d'obtenir des dépôts homogènes de films de polyacroléine d'épaisseur inférieure à quelques $10^{-2}$ µm. Par ailleurs, les films obtenus ne présentent pas une adhérence suffisante sur le support.

De même, les recherches portant sur le dépôt par électropolymérisation de films de polyacrylonitrile, n'ont pas permis d'obtenir des résultats satisfaisants en ce qui concerne l'homogénéité des films et le taux de recouvrement des surfaces métalliques revêtues.

Des travaux portant sur la réalisation de films à base de méthacrylonitrile ont permis l'obtention de films de poids moléculaire élevé ayant de bonnes propriétés d'adhésion, de dureté et de flexibilité, constitués soit par du polyméthacrylonitrile, soit par un copolymère du méthacrylonitrile.

Dans ce cas, on utilise pour l'électropolymérisation une solution contenant du méthacrylonitrile et éventuellement un autre monomère dans un solvant organique contenant un électrolyte constitué par du sel de Mckee, un sel de tétraalkylammonium, un nitrate ou un perchlorate de métal alcalin, et on réalise l'électropolymérisation à des densités de courant inférieures à 50 mA/$cm^2$.

Cependant, ce procédé ne convient pas pour la réalisation de films en polyacrylonitrile.

La présente invention a précisément pour objet un procédé qui permet d'obtenir par électropolymérisation le dépôt sur des surfaces conductrices de l'électricité de films organiques en polyacrylonitrile, présentant des propriétés satisfaisantes en ce qui concerne le taux de recouvrement de la surface revêtue, l'homogénéité du film obtenu et son adhérence sur cette surface.

Le procédé selon l'invention de dépôt par électropolymérisation d'un film de polyacrylonitrile ayant une épaisseur de $10^{-3}$ µm à 5 µm sur une surface conductrice de l'électricité se caractérise en ce qu'il consiste :

a) à préparer une solution ayant une teneur en eau au plus égale à $10^{-3}$ M/l et comprenant :

— de l'acrylonitrile,

— un électrolyte support constitué par un perchlorate d'ammonium quaternaire de formule :

$ClO_4^-$ 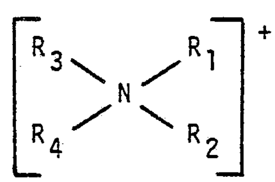

dans laquelle les radicaux $R_1$, $R_2$, $R_3$ et $R_4$ qui sont identiques ou différents sont des radicaux alkyle en $C_1$ à $C_4$ ou aryle, et

— un solvant organique aprotique ne donnant pas de réaction parasite avec l'acrylonitrile ; et

b) à électrolyser ladite solution dans une cellule d'électrolyse en utilisant comme cathode la surface

conductrice à revêtir et en polarisant cette cathode à un potentiel allant de – 2,4 volts à – 3 volts par rapport à une électrode $Ag/Ag^+$.

De préférence, la teneur en eau de la solution est au plus égale à $5.10^{-4}$ M/l.

Avantageusement, on électrolyse ladite solution en maintenant le potentiel de la cathode à une valeur constante par rapport à une électrode de référence.

Pour éviter qu'au cours de l'électrolyse certaines impuretés en particulier de la vapeur d'eau soient introduites dans la solution, on réalise de préférence cette électrolyse en atmosphère de gaz inerte, par exemple d'argon, contenant au maximum 10 ppm d'eau, 100 ppm de gaz carbonique et 10 000 ppm d'oxygène, et de préférence au plus 1 ppm d'eau, 10 ppm de gaz carbonique et 1 000 ppm d'oxygène.

Selon l'invention, l'utilisation d'une solution d'électrolyse dont la teneur en eau est maintenue à une valeur très faible, inférieure à $10^{-3}$ M/l permet de réaliser sur des surfaces métalliques des dépôts de films de polyacrylonitrile présentant des propriétés satisfaisantes, notamment en ce qui concerne leur taux de recouvrement des surfaces, leur adhérence sur ces surfaces et leur homogénéité.

En réalisant l'électrolyse à partir d'une solution très pure, en atmosphère contrôlée, on élimine toute possibilité de développement de réactions parasites susceptibles de conduire à la formation de produits secondaires tels que des oxydes ou des hydroxydes, qui ralentissent le processus de dépôt du film organique en se recombinant ou en réagissant avec le milieu réactionnel.

Par ailleurs, le fait d'utiliser l'acrylonitrile qui est une molécule organique comportant une liaison éthylénique terminale conjuguée avec un groupement électroattractif, permet de former des films par un mécanisme de polymérisation anionique plutôt que par un mécanisme de type radicalaire. Ainsi, on doit utiliser des solvants organiques aprotiques peu réactifs ne donnant pas lieu à des réactions secondaires, et éviter l'emploi de solutions aqueuses ou acides qui posent certains problèmes lorsque la surface métallique à revêtir est constituée par un métal usuel risquant de se dégrader ou de se dissoudre dans de telles solutions.

Enfin, le choix d'un électrolyte-support constitué par un perchlorate d'ammonium quaternaire présente l'avantage de permettre de réaliser l'électrolyse dans un domaine de potentiel très vaste sans donner lieu à des réactions secondaires susceptibles de modifier de façon sensible le processus d'électropolymérisation.

Selon l'invention, la concentration en acrylonitrile de la solution doit être suffisante pour permettre une vitesse de polymérisation élevée favorable au dépôt d'un film homogène ; cependant, la concentration en acrylonitrile ne doit pas non plus être trop élevée pour permettre l'obtention d'un dépôt homogène. La concentration en électrolyte-support doit être suffisante pour limiter la chute ohmique dans la cellule d'électropolymérisation.

A titre d'électrolytes-supports susceptibles d'être utilisés dans le procédé de l'invention, on peut citer le perchlorate de tétraéthylammonium, le perchlorate de tétrabutylammonium, le perchlorate de tétrapropylammonium et le perchlorate de benzyltriméthylammonium.

A titre de solvants susceptibles d'être utilisés, on doit citer les solvants aprotiques organiques, notamment l'hexaméthylphosphorotriamide, le diméthylsulfoxyde, l'acétonitrile, le chlorure de méthylène.

Le solvant est choisi en fonction du monomère utilisé en particulier pour ne pas donner lieu à des réactions secondaires avec ce monomère.

De préférence, on utilise comme solvant de l'acétonitrile.

Comme on l'a vu précédemment, les concentrations en monomère et en électrolyte-support de la solution ainsi que le rapport de ces concentrations constituent des paramètres très importants, en particulier pour obtenir un dépôt homogène, et elles sont choisies en fonction de la nature de l'électrolyte-support utilisé. Avantageusement, le rapport de la concentration en acrylonitrile sur la concentration en électrolyte-support est supérieur à 1. Lorsque l'électrolyte-support est le perchlorate de tétraéthylammonium, ce rapport est avantageusement compris entre 7 et 12, de préférence voisin de 10, et ces concentrations sont avantageusement de $5.10^{-2}$ M/l à $1.10^{-1}$ M/l pour le perchlorate et de $3{,}5.10^{-1}$ M/l à 1,2 M/l pour l'acrylonitrile.

Pour former à partir de telles solutions des dépôts minces et homogènes de films de polyacrylonitrile, on réalise l'électrolyse en atmosphère contrôlée, en appliquant à la cathode un potentiel situé dans la zone correspondant au transfert électronique direct entre la surface métallique qui joue le rôle de cathode et l'acrylonitrile, et d'une valeur plus négative que celle correspondant au pic d'inhibition de la réaction cathodique de l'acrylonitrile, soit à une valeur égale à/ou plus basse que – 2,4 V/Ag-$Ag^+$. La durée de polarisation est choisie en fonction de l'épaisseur du film que l'on veut obtenir. Généralement des durées de 5 millisecondes à 20 secondes sont suffisantes pour l'obtention de films dont l'épaisseur varie de $10^{-3}$ $\mu$m à 5 $\mu$m.

Ledit potentiel est déterminé à partir des courbes intensité potentiel obtenues dans le milieu réactionnel correspondant à la formation du film électropolymérisé. Une telle courbe est illustrée dans le cas de l'acrylonitrile sur la figure unique annexée qui représente la densité de courant (en $\mu A \cdot cm^{-2}$) en fonction du potentiel appliqué à une cathode en fer (volts/Ag-$Ag^+$) lors de l'électrolyse d'une solution comprenant de l'acétonitrile contenant $5.10^{-1}$ $M \cdot l^{-1}$ d'acrylonitrile et $5.10^{-2}$ $M \cdot l^{-1}$ de perchlorate de tétraéthylammonium, avec une vitesse de balayage de 1,5 $V \cdot min.^{-1}$.

On constate tout d'abord à partir de – 2,10 V une augmentation rapide de la densité de courant

correspondant à la réaction électro-chimique par transfert direct de l'acrylonitrile, puis à partir de – 2,40 V une baisse momentanée de la densité de courant correspondant à l'inhibition de la réaction cathodique du monomère. Cette baisse de la densité de courant illustre l'apparition du film homogène à la surface de l'électrode. A partir de – 2,55 V, la densité de courant croît à nouveau sous l'effet des potentiels plus négatifs du fait d'un apport d'énergie croissant.

Une limite vers les valeurs plus négatives du potentiel doit être respectée. Elle correspond à une perte d'homogénéité du film obtenu par suite d'une cinétique de dépôt trop importante. Dans le cas présent de l'acrylonitrile l'expérience montre qu'elle se situe aux environs de – 3 volts.

D'autres caractéristiques et avantages de l'invention apparaîtront mieux à la lecture de la description qui suit d'un exemple de mise en œuvre du procédé de l'invention donné bien entendu à titre illustratif et non limitatif.

Cet exemple se rapporte au dépôt de films de polyacrylonitrile à partir d'une solution d'acrylonitrile et de perchlorate de tétraéthylammonium dans de l'acétonitrile.

Tout d'abord, on prépare la solution d'électrolyse en opérant dans une boîte à gants, sous atmosphère d'argon, afin d'éliminer toute possibilité d'introduction d'impuretés de milieu réactionnel. L'argon circule en circuit fermé à un débit de 7 $m^3$/h et il est purifié par passage sur un système d'épuration fonctionnant en continu et comportant une colonne de tamis moléculaire pour éliminer la vapeur d'eau, une colonne remplie de copeaux de cuivre activé pour éliminer l'oxygène et des pièges refroidis à la température de l'azote liquide pour éliminer les traces d'hydrocarbures volatils et de gaz carbonique. Ainsi, le courant d'argon contient environ 0,1 % d'oxygène, 1 ppm de vapeur d'eau et 10 ppm de gaz carbonique.

L'acétonitrile et l'acrylonitrile utilisés pour la préparation de la solution ont été stockés pendant plusieurs jours sur un tamis moléculaire qui est renouvelé plusieurs fois. Avant utilisation, les solutions surnageantes sont distillées sous pression réduite d'argon, les distillats sont fractionnés et la teneur en eau des fractions obtenues est contrôlée par la méthode de Karl Fisher.

On élimine les fractions dont la teneur en eau est supérieure à $5.10^{-4}$ M/l de façon à utiliser pour la préparation de la solution de l'acétonitrile et de l'acrylonitrile ayant une teneur en eau inférieure à $5.10^{-4}$ M/l.

On purifie également le perchlorate de tétraéthylammonium en le déshydratant par stockage permanent sous vide à une température de 120 °C.

Pour préparer la solution d'électrolyse, on introduit dans l'acétonitrile purifié $5.10^{-1}$ M/l d'acrylonitrile et $5.10^{-2}$ M/l de perchlorate de tétraéthylammonium, et on stocke la solution à l'abri de la lumière. On précise que la teneur en eau de la solution obtenue est inférieure à $5.10^{-4}$ M/l.

On réalise ensuite le dépôt de films de polyacrylonitrile à partir de cette solution, par électropolymérisation à température ambiante en utilisant un dispositif d'électropolymérisation placé dans une boîte à gants, balayée en continu par de l'argon qui circule en circuit fermé à un débit de 7 $m^3$/h et qui est purifié comme précédemment de façon que ses teneurs en oxygène, en vapeur d'eau et en gaz carbonique soient sensiblement de 0,1 % pour l'oxygène, 1 ppm pour la vapeur d'eau et 10 ppm pour le gaz carbonique.

Le dispositif d'électropolymérisation est constitué par une cellule en téflon comportant un montage classique à trois électrodes constituées respectivement par une cathode, une électrode auxiliaire et une électrode de référence, et il comprend de préférence, une plaque de verre frittée pour assurer la séparation entre les compartiements cathodique et anodique afin d'améliorer la pureté des films obtenus.

La cathode qui constitue la surface métallique à revêtir et qui peut être sous la forme d'une électrode massive ou d'une électrode en couche mince, est réalisée en fer de qualité ARMCO. Dans le cas d'une électrode massive, celle-ci est soumise au préalable à un polissage à la pâte diamantée jusqu'à la granulométrie 1 μm, puis à un rinçage sous ultrasons, dans de l'alcool méthylique.

Lorsque la cathode est en couche mince, ayant par exemple une épaisseur de l'ordre de 0,5 μm, elle est déposée sur une plaque de verre par pulvérisation cathodique d'une cible de fer ARMCO sous atmosphère d'argon.

L'électrode auxiliaire est constituée par une plaque de platine et l'électrode de référence est une électrode $Ag/Ag^+$.

Bien que dans cet exemple, la cathode soit en fer, on précise que la cathode peut être réalisée en d'autres matériaux, en particulier en d'autres métaux par exemple en aluminium, en acier, en cuivre, en nickel, en platine ou en or, en oxydes conducteurs ou en matériaux semiconducteurs.

Pour réaliser l'électrolyse de la solution, on applique une différence de potentiel entre l'électrode de fer et l'électrode de platine, et on contrôle la polarisation de l'électrode de fer de façon à ce qu'elle soit constante pendant toute la durée de l'opération, et maintenue à une valeur d'au moins – 2,4 volts par rapport à l'électrode de référence $Ag/Ag^+$.

Par exemple avec un potentiel d'environ – 2,8 volts, on obtient en quelques millisecondes un film de polyacrylonitrile homogène présentant un taux de recouvrement de 100 % et ayant une épaisseur de l'ordre de $10^{-3}$ μm.

On précise que cette épaisseur est mesurée à partir du temps d'abrasion ionique nécessaire pour faire apparaître le signal caractéristique de l'électrode de fer en spectrométrie Auger.

Lorsqu'on réalise l'électrolyse de la solution pendant une durée plus longue, on obtient un film de

polyacrylonitrile présentant également une bonne homogénéité et un taux de recouvrement de 100 % dont l'épaisseur peut atteindre environ 5 μm lorsque la durée est d'environ 20 secondes.

On pourrait également obtenir un film présentant une épaisseur supérieure à $10^{-3}$ μm en portant la cathode à un potentiel plus négatif et en réalisant l'électrolyse pendant quelques millisecondes.

Les films obtenus sont ensuite analysés par spectrométrie Auger, par spectrométrie de masse des ions secondaires et par spectroscopie infrarouge par réflexion multiple, afin de vérifier la nature physico-chimique des films obtenus, leur pureté et le taux de recouvrement de l'électrode. Dans tous les cas, les résultats obtenus sont très bons.

On constate ainsi que, grâce au choix du milieu réactionnel et au contrôle très minutieux de la pureté des produits utilisés, le procédé de l'invention permet d'obtenir des films homogènes de $2.10^{-3}$ μm à 5 μm en réalisant l'électrolyse pendant des durées de 5 millisecondes à 15 secondes avec un potentiel de la cathode maintenu dans le cas du film de polyacrylonitrile à une valeur comprise approximativement entre − 2,4 volts et − 3 volts par rapport à une électrode $Ag/Ag^+$.

**Revendications**

1. Procédé de dépôt par électropolymérisation d'un film de polyacrylonitrile ayant une épaisseur de $10^{-3}$ μm à 5 μm sur une surface conductrice de l'électricité, caractérisé en ce qu'il consiste :

a) à préparer une solution ayant une teneur en eau au plus égale à $10^{-3}$ M/l comprenant :

— de l'acrylonitrile,

— un électrolyte support constitué par un perchlorate d'ammonium quaternaire de formule :

$ClO_4^-$ 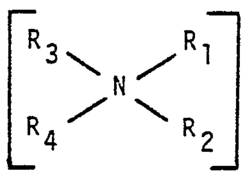

dans laquelle les radicaux $R_1$, $R_2$, $R_3$ et $R_4$ qui sont identiques ou différents, sont des radicaux alkyle en $C_1$ à $C_4$ ou aryle, et

— un solvant organique aprotique ne donnant pas de réaction parasite avec l'acrylonitrile, et

b) à électrolyser ladite solution dans une cellule d'électrolyse en utilisant comme cathode la surface conductrice à revêtir et en polarisant cette cathode à un potentiel allant de − 2,4 volts à − 3 volts par rapport à une électrode $Ag/Ag^+$.

2. Procédé selon la revendication 1, caractérisé en ce que la teneur en eau de ladite solution est au plus égale à $5.10^{-4}$ M/l.

3. Procédé selon l'une quelconque des revendications 1 et 2, caractérisé en ce que l'on électrolyse ladite solution en maintenant le potentiel de la cathode à une valeur constante par rapport à une électrode de référence.

4. Procédé selon l'une quelconque des revendications 1 à 3, caractérisé en ce que l'on électrolyse ladite solution en atmosphère de gaz inerte contenant au maximum 10 ppm d'eau, 100 ppm de gaz carbonique et 10 000 ppm d'oxygène.

5. Procédé selon la revendication 4. caractérisé en ce que le gaz inerte contient au maximum 1 ppm d'eau, 10 ppm de gaz carbonique et 1 000 ppm d'oxygène.

6. Procédé selon l'une quelconque des revendications 1 à 5, caractérisé en ce qu'on électrolyse ladite solution pendant une durée comprise entre 5 millisecondes et 20 secondes.

7. Procédé selon l'une quelconque des revendications 1 à 6, caractérisé en ce que le solvant organique est choisi dans le groupe comprenant l'acétonitrile, l'hexaméthylphosphorotriamide, le diméthylsulfoxyde et le chlorure de méthylène.

8. Procédé selon l'une quelconque des revendications 1 à 7, caractérisé en ce que l'électrolyte-support est choisi dans le groupe comprenant le perchlorate de tétraéthylammonium, le perchlorate de tétrabutylammonium, le perchlorate de tétrapropylammonium et le perchlorate de benzyltriméthylammonium.

9. Procédé selon l'une quelconque des revendications 1 à 6, caractérisé en ce que la teneur en eau de la solution est au plus égale à $5.10^{-4}$ M/l, l'électrolyte-support est le perchlorate de tétraéthylammonium, et le solvant est l'acétonitrile.

10. Procédé selon la revendication 9, caractérisé en ce que le rapport de la concentration en acrylonitrile sur la concentration en perchlorate de tétraéthylammonium de la solution est compris entre 7 et 12.

11. Procédé selon l'une quelconque des revendications 9 et 10, caractérisé en ce que la concentration en acrylonitrile de ladite solution est de $3,5.10^{-1}$ à 1,2 M/l et la concentration en perchlorate de tétraéthylammonium de ladite solution est de $5.10^{-2}$ à $1.10^{-1}$ M/l.

12. Procédé selon l'une quelconque des revendications 1 à 9, caractérisé en ce que le rapport de la concentration en acrylonitrile sur la concentration en électrolyte-support de la solution est supérieur à 1.

**Claims**.

1. Process for the deposition by electropolymerisation of a film of polyacrylonitrile having a thickness from $10^{-3}$ µm to 5 µm on an electrically-conductive surface, characterized in that it comprises :

a) preparing a solution having a water content of at most $10^{-3}$ M/l comprising :
— acrylonitrile,
— a support electrolyte comprising a quaternary ammonium perchlorate having the formula

$ClO_4^-$ 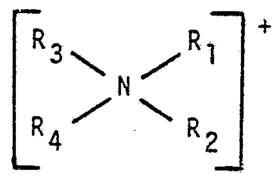

in which the groups $R_1$, $R_2$, $R_3$, and $R_4$, which can be the same or different, are $C_1$ to $C_4$ alkyl or aryl groups, and
— an aprotic organic solvent that does not undergo parasitic reactions with acrylonitrile, and

b) electrolysing said solution in an electrolysis cell, employing as cathode the conductive surface to be coated, and polarising said cathode to a potential of from − 2.4 volts to − 3 volts, with respect to a $Ag/Ag^+$ electrode.

2. Process according to Claim 1, characterized in that the water content of said solution is at most $5.10^{-4}$ M/l.

3. Process according to either of Claims 1 and 2, characterized in that said solution is electrolysed while maintaining the cathode potential at a value which is constant with respect to a reference electrode.

4. Process according to any one of Claims 1 to 3, characterized in that the solution is electrolysed in an inert gas atmosphere containing at most 10 ppm of water, 100 ppm of carbon dioxide and 10.000 ppm of oxygen.

5. Process according to Claim 4, characterized in that the inert gas contains at most 1 ppm of water, 10 ppm of carbon dioxide and 1 000 ppm of oxygen.

6. Process according to any one of Claims 1 to 5, characterized in that the solution is electrolysed for a period between 5 milliseconds and 20 seconds.

7. Process according to any one of Claims 1 to 6, characterized in that the organic solvent is selected from the group comprising acetonitrile, hexamethylphosphorotriamide, dimethylsulphoxide, and methylene dichloride.

8. Process according to any one of Claims 1 to 7, characterized in that the support electrolyte is selected from the group comprising tetraethylammonium perchlorate, tetrabutylammonium perchlorate, tetrapropylammonium perchlorate and benzyltrimethylammonium perchlorate.

9. Process according to any one of Claims 1 to 6, characterized in that the water content of the solution is at most $5.10^{-4}$ M/l, the support electrolyte is tetraethylammonium perchlorate, and the solvent is acetonitrile.

10. Process according to Claim 9, characterized in that the ratio of the acrylonitrile content to the tetraethylammonium perchlorate content of the solution is between 7 and 12.

11. Process according to either of Claims 9 and 10, characterized in that the concentration of acrylonitrile in said solution is from $3.5.10^{-1}$ to 1.2 M/l and the concentration of tetraethylammonium perchlorate in said solution is from $5.10^{-2}$ to $1.10^{-1}$ M/l.

12. Process according to any one of Claims 1 to 9, characterized in that the ratio of the acrylonitrile content to the support electrolyte content of the solution is greater than 1.

**Patentansprüche**

1. Verfahren zur Ablagerung eines Polyacrylnitrilfilms mit einer Dicke von $10^{-3}$ µm bis 5 µm durch Elektropolymerisation auf einer elektrisch leitenden Oberfläche, dadurch gekennzeichnet, daß es besteht aus :

a) der Herstellung einer Lösung mit einem Wassergehalt von höchstens $10^{-3}$ M/l, die enthält :
— Acrylnitril,
— einen Trägerelektrolyten, bestehend aus einem quaternären Ammoniumperchlorat der Formel

$ClO_4^-$ 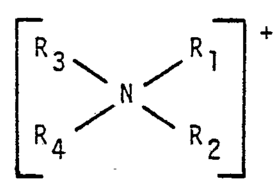

in der die Reste $R_1$, $R_2$, $R_3$ und $R_4$, die gleich oder verschieden sind, $C_1$-$C_4$-Alkylreste oder Arylreste sind, und

— ein aprotisches organisches Lösungsmittel, das mit Acrylnitril keine Nebenreaktion ergibt, und

b) dem Elektrolysieren dieser Lösung in einer Elektrolysezelle unter Verwendung der zu beschichtenden elektrisch leitenden Oberfläche als Kathode und unter Polarisation dieser Kathode auf ein Potential von − 2,4 Volt bis − 3 Volt, bezogen auf eine $Ag/Ag^+$-Elektrode.

2. Verfahren nach Anspruch 1, dadurch gekennzeichnet, daß der Wassergehalt der Lösung höchstens $5.10^{-4}$ M/l beträgt.

3. Verfahren nach einem der Ansprüche 1 und 2, dadurch gekennzeichnet, daß die Lösung elektrolysiert wird, indem man das Potential der Kathode bei einem konstanten Wert, bezogen auf eine Bezugselektrode, hält.

4. Verfahren nach einem der Ansprüche 1 bis 3, dadurch gekennzeichnet, daß die Lösung in einer Inertgas-Atmosphäre elektrolysiert wird, die höchstens 10 ppm Wasser, 100 ppm Kohlensäuregas und 10 000 ppm Sauerstoff enthält.

5. Verfahren nach Anspruch 4, dadurch gekennzeichnet, daß das Inertgas höchstens 1 ppm Wasser, 10 ppm Kohlensäuregas und 1 000 ppm Sauerstoff enthält.

6. Verfahren nach einem der Ansprüche 1 bis 5, dadurch gekennzeichnet, daß die Lösung für eine Zeitspanne zwischen 5 Millisekunden und 20 Sekunden elektrolysiert wird.

7. Verfahren nach einem der Ansprüche 1 bis 6, dadurch gekennzeichnet, daß das organische Lösungsmittel ausgewählt wird aus der Gruppe Acetonitril, Hexamethylphosphortriamid, Dimethylsulfoxid und Methylenchlorid.

8. Verfahren nach einem der Ansprüche 1 bis 7, dadurch gekennzeichnet, daß der Trägerelektrolyt ausgewählt wird aus der Gruppe Tetraethylammoniumperchlorat, Tetrabutylammoniumperchlorat, Tetrapropylammoniumperchlorat und Benzyltrimethylammoniumperchlorat.

9. Verfahren nach einem der Ansprüche 1 bis 6, dadurch gekennzeichnet, daß der Wassergehalt der Lösung höchstens $5.10^{-4}$ M/l beträgt, daß es sich bei dem Trägerelektrolyten um Tetraethylammoniumperchlorat handelt und daß es sich bei dem Lösungsmittel um Acetonitril handelt.

10. Verfahren nach Anspruch 9, dadurch gekennzeichnet, daß das Verhältnis der Acrylnitrilkonzentration zur Tetraethylammoniumperchloratkonzentration der Lösung zwischen 7 und 12 liegt.

11. Verfahren nach einem der Ansprüche 9 und 10, dadurch gekennzeichnet, daß die Acrylnitrilkonzentration der Lösung $3{,}5.10^{-1}$ bis 1,2 M/l beträgt und daß die Tetraethylammoniumperchloratkonzentration der Lösung $5.10^{-2}$ bis $1.10^{-1}$ M/l beträgt.

12. Verfahren nach einem der Ansprüche 1 bis 9, dadurch gekennzeichnet, daß das Verhältnis der Acrylnitrilkonzentration zur Trägerelektrolytkonzentration der Lösung oberhalb 1 liegt.

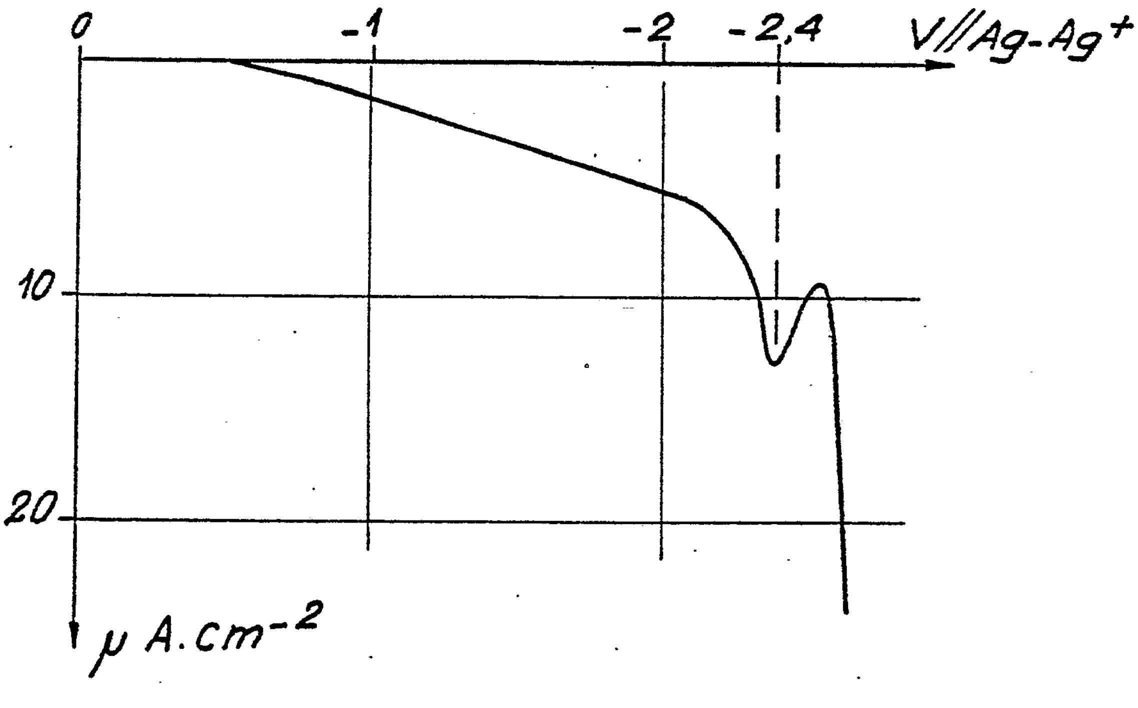
0
-1
-2
-2,4
V//Ag-Ag+
10
20
μ A.cm-2